# EUROPEAN PATENT APPLICATION

(11) **EP 3 441 396 A1**
(43) Date of publication of application: **13.02.2019**
(21) Application number: 17185115.7
(22) Date of filing: 07.08.2017
(51) Int. Cl.: C07F 9/00, C22B 60/02, G21F 9/10, G21F 9/12

(54) **METHOD FOR SEPARATING URANIUM AND/OR THORIUM**

(71) Applicant: Université de Montpellier, 34090 Montpellier (FR); CENTRE NATIONAL DE LA RECHERCHE SCIENTIFIQUE, 75016 Paris (FR); Ecole Nationale Supérieure de Chimie de Montpellier, 34296 Montpellier (FR)
(72) Inventor: GOMES RODRIGUES, Donatien, 07700 BOURG SAINT ANDEOL (FR); MONGE-DARCOS, Sophie, 34380 VIOLS LE FORT (FR); FAUR, Catherine, 34980 SAINT GELY DU FESC (FR); DACHEUX, Nicolas, 30650 ROCHEFORT DU GARD (FR); PELLET-ROSTAING, Stéphane, 69100 VILLEURBANNE (FR); BOUYER, Denis, 34160 CASTRIES (FR)
(74) Representative: Agasse, Stéphane

(57) **Abstract**

The invention pertains to a method for separating uranium and/or thorium from an aqueous suspension, said method comprising:
a) Contacting said suspension with at least a polymer having formula (I) 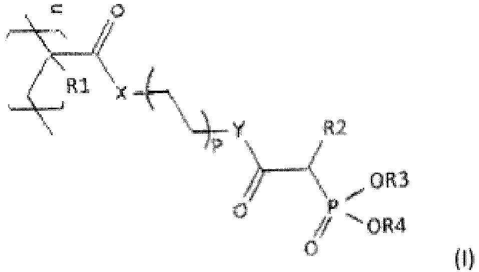 wherein
n is an integer which is not 0 and is no more than 50
R1 is H or CH₃,
R2 is H or a C1-C20-alkyl,
R3 and R4 are independently H or a C1-C20-alkyl,
X, Y are O or NH,
said polymer being soluble in said aqueous suspension, and
wherein
when R3 and R4 are H, p is an integer which is 1 or more and 10 at the most, and said polymer is a flocculating polymer, and
when at least one of R3 and R4 is not H, p is an integer which is 3 or more and 10 at the most, and said polymer is a thermosensitive polymer and has a LCST in said suspension,

b) Carrying out at least one of the following steps b1) and b2)
b1) If said suspension contains uranium, separating the aggregates resulting from flocculation of said polymer, from said mixture,
b2) If said suspension contains thorium, modifying the mixture until the LCST of the polymer in the mixture is reached or exceeded and separating the resulting aggregates from said mixture; and

c) Recovering at least one of uranium and/or thorium-free mixture, aggregates bearing uranium and aggregates bearing thorium.

## Description

The invention relates to a method for separating uranium and/or thorium from an aqueous suspension.

Thorium and uranium are radioactive elements found in nature which are of great economic importance due to their use in particular as a nuclear fuel. They are generally extracted from different minerals such as monazite, samarskite and bastnaesite, principally constituted of rare earth elements (REE). After grinding, minerals are treated with basic and/or acid chemical attack to dissolve and to obtain aqueous solutions of REE/U/Th. Uranium and thorium are subsequently extracted and separated with different processes such as precipitation, liquid-liquid extraction and sorption on functionalized resins in acidic aqueous solutions. Alternative ways are being developed, such as recycling and exploitation of new mineral deposits involving separation and recovery processes. Although it is widely used by companies, the incomplete recovery and low selectivity of targeted metals reached with some coprecipitation phenomena (precipitation of a part of non-targeted cations) induce the use of many successive steps. Solvent extraction processes, also known as liquid-liquid extraction, for thorium and uranium recovery show high selectivity. However, despite a high efficiency and an excellent selectivity, a large amount of aliphatic solvents is required, which are generally carcinogenic compounds and make them harmful for environment and health.

Side to these methods, new recovery processes for extracting REE are emerging involving functionalized thermosensitive copolymers having complexing units and thermosensitive units. D. Gomes Rodrigues et al., Polym. Chem., 2015, 6, 5264-5272 discloses the synthesis of a thermosensitive-complexing homopolymer, poly(diethyl-6-(acrylamido)hexylcarbamoylmethylphosphonate [P(CPAAm6C)] and its use for lanthanide recovery involving three steps: (i) complexation of lanthanides by the carbamoylmethylphosphonate (cmp) functions of P(CPAAm6C), at a temperature lower than the LCST (lower critical solution temperature) of P(CPAAm6C), (ii) increase of temperature above said LCST to increase the particle size and (iii) filtration of the precipitated polymer containing lanthanides. In addition to its simple and safe operation, this homopolymer makes possible to obtain both properties from a single monomer and enables to overcome an unclear ratio control with copolymerization (thermosensitive monomer/complexing monomer).

These methods only target REE and the specific extraction of thorium and uranium in a cost-effective and safe manner remains a challenge. It is all the greater because as mentioned above thorium and uranium are generally present with REE, and until now, no extraction method is available being efficient and specific to thorium and uranium.

The present invention provides a solution with a method that allows specifically separating uranium and/or thorium. This method is implemented for an aqueous suspension from which thorium and/or uranium are to be extracted in order to obtain at least one of a thorium- and/or uranium-free suspension and a recovery of thorium and/or uranium. This suspension may for example result from a solid or a liquid medium during the extraction process of minerals.

In accordance with the invention, the method comprises:
a) Contacting said suspension with at least a polymer having formula (I) 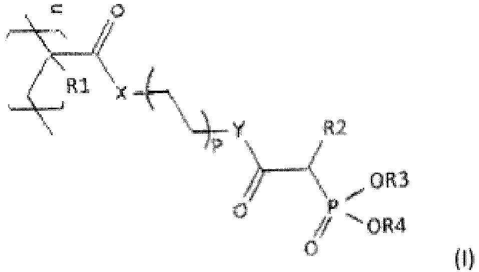 wherein
   n is an integer which is not 0 and is no more than 50,
   R1 is H or CH₃,
   R2 is H or a C1-C20-alkyl, preferably C1-C6-alkyl,
   R3 and R4 are independently H or a C1-C20-alkyl, preferably C1-C6-alkyl,
   X is O or NH,
   Y is O or NH,
   said polymer being soluble in said aqueous suspension, and
   wherein
   when R3 and R4 are H, p is an integer which is 1 or more and 10 at the most, and said polymer is a flocculating polymer, and,
   when at least one of R3 and R4 is not H, p is an integer which is 3 or more and 10 at the most, and said polymer is a thermosensitive polymer and has a LCST in said suspension,
b) Carrying out at least one of the following steps b1) and b2)
   b1) If said suspension contains uranium, separating the aggregates resulting from flocculation of said polymer, from said mixture,
   b2) If said suspension contains thorium, modifying the mixture until the LCST of the polymer in the mixture is reached or exceeded and separating the resulting aggregates from said mixture, and
c) Recovering at least one of uranium- and/or thorium-free mixture, aggregates bearing uranium and aggregates bearing thorium.

This method involves a functionalized thermosensitive homopolymer which allows getting around the drawbacks of a copolymer as mentioned above. In an original way, said homopolymer combines both a complexing portion and an isolating portion, wherein said complexing portion allows said homopolymer to specifically capture uranium or thorium and said isolating portion allows said homopolymer to form aggregates which can be easily separated from the suspension. The complexing portion bears ester functions that whether they are hydrolyzed or not are specific to uranium or thorium, respectively, and said isolating portion has flocculating or thermosensitive properties depending on the conditions in said suspension making it suitable for isolating uranium- or thorium-complexes.

In one embodiment of the invention, the method is capable of separating uranium and thorium from an aqueous suspension, wherein said method comprising
a) Contacting said suspension with at least two polymers having formula (I) above,
   one polymer having formula (I) wherein R3 and R4 are H and p is an integer which is 1 or more and 10 at the most, said polymer being flocculating, and
   one polymer having formula (I) wherein at least one of R3 and R4 is not H and p is an integer which is 3 or more and 10 at the most, said polymer being thermosensitive and having a LCST in said suspension,
b1) Allowing flocculation to occur and separating the aggregates resulting from flocculation of said polymer, from said mixture,
b2) Modifying the mixture until the LCST of the polymer in the mixture is reached or exceeded and separating the resulting aggregates from said mixture; and
c) Recovering the uranium- and thorium-free mixture and/or aggregates bearing uranium and aggregates bearing thorium.

In a preferred embodiment, said polymer(s) is(are) selected from the group consisting of polymers of formula (I), wherein
R1 is H,
R2 is H,
R3 and R4 are independently H or CH₂-CH₃,
X and Y are NH, respectively,
p is 3, and
n is an integer which is not 0 and is no more than 50.

In accordance with the invention, a polymer having formula (I) wherein R1, R2, X, Y, p and n have any definition given above, and R3 and R4 are not H, may be prepared by a method as described in D. Gomes Rodrigues et al., Polym. Chem. (2015) previously mentioned, said method involving radical polymerization of a carbamoylmethylphosphonate monomer. This polymer has ester complexing portions and is capable of specifically sorbing thorium in a suspension which may include REE, uranium and other elements. It is further capable of producing a cloud point in the suspension which results in forming aggregates that are easily separated then.

A polymer having formula (I) wherein R1, R2, X, Y, p and n have any definition given above, and at least one of R3 and R4 is H and preferably both R3 and R4 are H, may be prepared by hydrolyzing homopolymer P(CPAAm6C); it may alternatively be prepared by a method involving radical polymerization of a carbamoylmethylphosphonic acid monomer. In either case, it may be prepared by the one skilled in the art aware of the common general knowledge. This polymer bears acid complexing portions and is capable of specifically sorbing uranium in a suspension which may include REE, thorium and other elements. It is further capable of flocculating in the suspension which results in forming aggregates that are easily separated then.

In the context of the invention, flocculation is a process wherein complexing phosphonic acid functions of a polymer of formula (I) with uranium will cause the polymer to come out the suspension in the form of floc. The formation of flocs is observed because it leads to sedimentation. A thermosensitive or thermoresponsive polymer is a polymer which, when it is in an aqueous solution becomes insoluble upon heating above a so-called LCST, this change being reversible by decreasing temperature below said LCST. The LCST is dependent on pH, ionic strength and concentration of said polymer in the solution. The formation of aggregates may be observed and they could be filtrated by a micro-filtration operation (no polymer was detected in the permeate).

In step b2), the LCST of the polymer (I) in said suspension is advantageously reached or exceeded by modifying at least one of temperature, pH and ionic strength of said suspension.

In accordance with a further embodiment of the invention, the method further comprises separating uranium from aggregates of step b1) and/or separating thorium from aggregates of step b2). This may be achieved by any separation which is known from the skilled in the art for example filtration, centrifugation.

### Examples

Methods that may be used to measure parameters are below described.

Metal analysis: The concentrations of metals were determined by Inductively Coupled Plasma-Optical Emission Spectrometry (ICP-OES) with a SPECTRO ARCOS ICP spectrometer. The spectrometer was calibrated with 0; 0.5; 1; 5; 10 and 15 mg.L⁻¹ standard solutions (prepared by dilution of 1000 commercial standards of Gd, Th and U) and all samples were diluted to be within this reference range.

**pH-metric titration of *h*P(CPAAm6C):** *h*P(CPAAm6C) (500 mg) was dissolved in water (50 mL). Titration of the resulting solution was achieved using a 0.1 N NaOH solution. pH values were plotted as a function of the volume of NaOH and pKₐ values were determined at the half equivalence point for each titration.

**Cloud point (CP) measurements:** Thermosensitivity of the polymers was estimated by a change in the transmittance through the polymer solution with temperature. The measurement of the transmittance was carried out on different concentrations of polymer aqueous solutions with a Perkin Elmer Lambda 35 UV-Visible spectrometer equipped with a Peltier temperature programmer PTP-1+1. A wavelength of 500 nm was selected. The temperature ramp was 0.1 °C per minute between 15°C and 50°C. The thermosensitivity was characterized by a sudden slope change in the transmittance curve. The CP values of the copolymers thus corresponded to the minimum of the derivative curves.

### Example 1: Synthesis of hydrolyzed poly(diethyl-6-(acrylamido)hexylcarbamoylmethylphosphonate [hP(CPAAm6C)]

The reaction is carried out starting from poly(diethyl-6-(acrylamido)hexylcarbamoyl-methylphosphonate) P(CPAAm6C) which was prepared as described in D. Gomes Rodrigues et al., Polym. Chem., 2015, 6, 5264-5272.

It was achieved in two steps.

First, the formation of the silyl derivative was carried out with addition of bromotrimethylsilane (TMSBr) to poly(diethyl-6-(acrylamido)hexylcarbamoyl-methylphosphonate) P(CPAAm6C): TMSBr (5.47 mL, 37 mmol) was added to a solution of P(CPAAm6C) (3 g, 8.61 mmol, 34600 g.mol⁻¹, *Ð* = 3.7) in anhydrous dichloromethane (40 mL). After stirring for 3 hours at room temperature, the mixture was concentrated under reduced pressure. The second step consisted in hydrolyzing the silyl derivative by the addition of a large excess of methanol: methanol (100 mL) was added and the mixture was stirred for 4 hours at room temperature. The solvent was evaporated and the product was dried to a constant weight under vacuum.

Resulting hP(CPAAm6C) containing phosphonic diacid moieties, was characterized by ¹H NMR and IR spectroscopy.
¹H NMR (D₂O, 300MHz) δ (ppm): 1,16-1,57 (m, 4H, -C*H₂*-), 2,72-2,89 (m, 2H CO-C*H₂*-PO), 3,00-3,24 (m,4H, NH-C*H₂*-).

### Example 2: Separating uranium from an aqueous suspension containing gadolinium and thorium

Sorption experiments were performed with solution containing targeted cations modeling the mineral dissolution processes (0.82 mol.% Gd, 0.10 mol.% Th, 0.04 mol.% U). All solutions were prepared with pH equal to 1. Experiments were carried out with dialysis method using 10 mL of hP(CPAAm6C) (5 g.L⁻¹) and 100 mL of cationic solution with various total amount of cations.

**Gd/Th/U mixture:** The distribution of Gd, Th and U loaded on the hP(CPAAm6C) is a function of Σ*ᵢₙᵢₜₐₗ C*/*cmp* where C represents all cations present in the suspension and cmp represents the carbamoylmethylphosphonate complexing functions. The increasing Σ*ᵢₙᵢₜₐₗ C*/*cmp* causes a modification of the distribution. The uranyl ion (UO₂²⁺) was preferentially sorbed on the hcmp functionalized polymer. The molar fraction of sorbed uranium reached 15% for Σ*ᵢₙᵢₜₐₗ C*/*cmp* = 0.06, 27% for Σ*ᵢₙᵢₜₐₗ C*/*cmp* = 0.28, 37% for Σ*ᵢₙᵢₜₐₗ C*/*cmp* = 0.86 and 97% for Σ*ᵢₙᵢₜₐₗ C*/*cmp* = 8.34. At the same time, a modification of the distribution of gadolinium and thorium was observed when increasing the Σ*ᵢₙᵢₜₐₗ C*/*cmp* ratio from 77% to 2% for Gd and 8 to 1% for Th. This tendency towards the molar percentage of uranium trapped on the sorbent, with a mixture initially containing only 4% of U, clearly shows that the carbamoylmethylphosphonic acid is very selective for U. hP(CPAAm6C) precipitated with the complexation of U.

### Example 3: Separating thorium from an aqueous suspension containing gadolinium and uranium

**Gd/Th/U mixture:** the molar distribution of the Gd(III), Th(IV) and U(VI) sorbed on the P(CPAAm6C) at equilibrium, shows an increasing Σ*ᵢₙᵢₜₐₗ C*/*cmp.* As Σ*ᵢₙᵢₜₐₗ C*/*cmp* increased, the distribution was modified to preferentially sorb the thorium on the cmp functionalized polymer: the mole fraction of loaded thorium reached 72% at Σ*ᵢₙᵢₜₐₗ C*/*cmp* of 0.1, 85% at Σ*ᵢₙᵢₜₐₗ C*/*cmp* of 0.4 and 100% at Σ*ᵢₙᵢₜₐₗ C*/*cmp* of 10.3. Simultaneously, a complementary decrease of sorbed gadolinium (from 3% to 0%) and uranium (24% to 0%) was observed with the increase of the Σ*ᵢₙᵢₜₐₗ C*/*cmp* ratio. The mixture initially contained 86 mol.% of gadolinium, 10 mol.% of thorium and 4 mol.% of uranium. Despite this initial distribution, the fraction of loaded thorium was the highest for all Σ*ᵢₙᵢₜₐₗ C*/*cmp.* These results clearly showed that the P(CPAAm6C) was selective for Th(IV) in the presence of U(VI) and Gd(III).

## Claims

1. Method for separating uranium and/or thorium from an aqueous suspension, said method comprising:
a) Contacting said suspension with at least a polymer having formula (I) 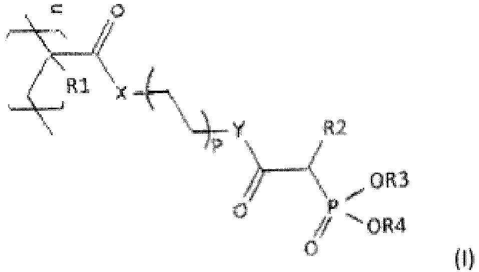 wherein
n is an integer which is not 0 and is no more than 50
R1 is H or CH₃,
R2 is H or a C1-C20-alkyl,
R3 and R4 are independently H or a C1-C20-alkyl,
X is O or NH,
Y is O or NH,
said polymer being soluble in said aqueous suspension, and
wherein
when R3 and R4 are H, p is an integer which is 1 or more and 10 at the most, and said polymer is a flocculating polymer, and
when at least one of R3 and R4 is not H, p is an integer which is 3 or more and 10 at the most, and said polymer is a thermosensitive polymer and has a LCST in said suspension,
b) Carrying out at least one of the following steps b1) and b2)
b1) If said suspension contains uranium, separating the aggregates resulting from flocculation of said polymer, from said mixture,
b2) If said suspension contains thorium, modifying the mixture until the LCST of the polymer in the mixture is reached or exceeded and separating the resulting aggregates from said mixture; and
c) Recovering at least one of uranium and/or thorium-free mixture, aggregates bearing uranium and aggregates bearing thorium.

2. Method for separating uranium and thorium from an aqueous suspension according to claim 1, comprising
a) Contacting said suspension with at least two polymers having formula (I), one polymer having formula (I) wherein R3 and R4 are H and p is an integer which is 1 or more and 10 at the most, said polymer being a flocculating polymer, and
one polymer having formula (I) wherein at least one of R3 and R4 is not H and p is an integer which is 3 or more and 10 at the most, said polymer being a thermosensitive polymer and having a LCST in said suspension,
b1) Allowing flocculation to occur and separating the aggregates resulting from flocculation of said polymer, from said mixture,
b2) Modifying the mixture until the LCST of the polymer in the mixture is reached or exceeded and separating the resulting aggregates from said mixture; and
c) Recovering the uranium- and thorium-free mixture and/or aggregates bearing uranium and aggregates bearing thorium.

3. Method according to claim 1 or 2, wherein said polymer(s) is(are) selected from the group consisting of polymers of formula (I), wherein
R2 is H or a C1-C6-alkyl, and
R3 and R4 are independently H or a C1-C20-alkyl.

4. Method according to anyone of claims 1 to 3, wherein said polymer(s) is(are) selected from the group consisting of polymers of formula (I), wherein
R1 is H,
R2 is H,
R3 and R4 are independently H or CH₂-CH₃,
X and Y are NH, respectively, and
p is 3.

5. Method according to any one of the preceding claims, wherein in step b2), the LCST of the polymer (I) in said suspension is reached or exceeded by modifying at least one of temperature, pH and ionic strength of said suspension.

6. Method according to any one of the preceding claims, further comprising separating uranium from aggregates of step b1) and/or separating thorium from aggregates of step b2).
